# EUROPEAN PATENT APPLICATION

(11) **EP 2 326 098 A2**
(43) Date of publication of application: **25.05.2011**
(21) Application number: 10190604.8
(22) Date of filing: 10.11.2010
(51) Int. Cl.: H04N 13/00

(54) **Image displaying apparatus and image signal processing method of the same**

(30) Priority: 19.11.2009 KR 20090112121
(71) Applicant: Samsung Electronics Co., Ltd., Gyeonggi-do 442-742 (KR)
(72) Inventor: Kim, Do-youn, Seoul (KR); Choi, Young-hun, Gyenggi-do (KR); Lee, Kyung-hwan, Gyeonggi-do (KR)
(74) Representative: D'Halleweyn, Nele Veerle Trees Gertrudis

(57) **Abstract**

Disclosed is an image displaying apparatus for displaying a received three-dimensional (3D) image signal as a two-dimensional (2D) image or a 3D image, and a method for performing the same. In the method, the 3D image signal is divided into left and right eye signals. Based on a user's selection, the 3D image signal is either displayed as the 3D image, by alternately displaying the left and right eye signals, or displayed as the 2D image, by consecutively displaying either the left eye signals or the right eye signals.

## Description

### BACKGROUND

### 1. Field

Apparatuses and methods consistent with the exemplary embodiments relate to an image displaying apparatus and an image signal processing method of the same, and more particularly, to an image displaying apparatus that receives and displays a three-dimensional image and an image signal processing method of the same.

### 2. Description of the Related Art

With the development of technology, an image displaying apparatus processes and displays various types of video signals, which may be digital or analog. Users may view solid images, i.e., thee-dimensional (3D) image signals, on a monitor or a TV, which is easy to access. Unlike a two-dimensional (2D) image signal, the 3D image signal has content divided into right and left eye images, and the divided images are displayed for user's left eye and right eye, respectively. To experience a 3D image by using an image which is divided into left eye and right eye images, a user wears shutter glasses, which are open and closed to alternately display left and right screens.

Although a user may view the 2D image with the 3D image signal, the resolution or frames of the image are reduced by an image input method.

### SUMMARY

One or more exemplary embodiments provide an image displaying apparatus and an image signal processing method of the same which displays a three-dimensional (3D) image signal in the form of a two-dimensional (2D) image at a compensated frame rate.

Another exemplary embodiment is to provide an image displaying apparatus and an image signal processing method of the same which displays a three-dimensional (3D) image signal in the form of a two-dimensional (2D) image including a compensation frame.

Still another exemplary embodiment is to provide an image displaying apparatus and an image signal processing method of the same which displays a three-dimensional image signal (3D) in the form of a two-dimensional (2D) image by adjusting a resolution and a frame rate.

The foregoing and/or other aspects may be achieved by providing an image displaying apparatus, including: a receiver which receives a three-dimensional (3D) image signal; a signal divider which divides the 3D image signal into a left eye signal and a right eye signal; a frame rate converter (FRC) which converts a frame rate of the received 3D image signal from a first frame rate to a second frame rate; a user selection unit that receives a user selection input that indicates whether to display the 3D image signal as a two-dimensional (2D) image or a 3D image; a display unit which displays the 3D image signal as the 2D image or the 3D image, based on the user selection input received by the user selection unit; and a controller which controls the FRC and the signal divider to alternately display, on the display unit, the divided left eye signal and right eye signal at the first frame rate if the user selection input indicates to display the 3D image signal as the 3D image, and to consecutively display, on the display unit, one of the divided left eye signal and right eye signal at the second frame rate if the user selection input indicates to display the 3D image signal as the 2D image.

The image displaying apparatus may further include a storage unit which stores the divided left eye signal and right eye signal by frame, wherein the FRC alternately outputs, to the display unit, a left eye frame and a right eye frame stored in the storage unit at the first frame rate if the user selection input indicates to display the 3D image signal as the 3D image, and consecutively outputs, to the display unit, one of the left eye frame and the right eye frame stored in the storage unit at the second frame rate if the user selection input indicates to display the 3D image signal as the 2D image.

The second frame rate may be equal to or greater than the first frame rate.

The FRC generates at least one interpolation frame with the left eye frame and an adjacent left eye frame, and consecutively outputs, to the display unit, the left eye frame and the interpolation frame at the second frame rate if the user selection input indicates to display the 3D image signal as the 2D image.

The second frame rate is equal to the first frame rate, and the FRC generates a single interpolation frame.

The second frame rate is greater than the first frame rate, and the FRC generates at least two interpolation frames.

The FRC generates at least one interpolation frame with the right eye frame and an adjacent right eye frame, and consecutively outputs, to the display unit, the right eye frame and the interpolation frame at the second frame rate if the user selection input indicates to display the 3D image signal as the 2D image.

The second frame rate is equal to the first frame rate, and the FRC generates a single interpolation frame.

The second frame rate is greater than the first frame rate, and the FRC generates at least two interpolation frames.

The foregoing and/or other aspects may be achieved by providing an image signal processing method of an image displaying apparatus which comprises a display unit, the method including: receiving, by the image displaying apparatus, a three-dimensional (3D) image signal; dividing the received 3D image signal into a left eye signal and a right eye signal; receiving a selection signal that indicates whether to display the 3D image signal as a 3D image or to display the 3D image signal as a 2D image; and alternately displaying, on the display unit, the divided left eye signal and right eye signal at a first frame rate if the selection signal indicates to display the 3D image signal as the 3D image, and consecutively displaying, on the display unit, one of the divided left eye signal and right eye signal at a second frame rate if the selection signal indicates to display the 3D image signal as the 2D image.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a control block diagram of an image displaying apparatus according to an exemplary embodiment;

FIG. 2 illustrates an image signal processed according to an exemplary embodiment;

FIG. 3 illustrates an image signal processed according to another exemplary embodiment;

FIG. 4 illustrates an image signal processed according to still another exemplary embodiment;

FIG. 5 is a control flowchart of an image signal processing method of the image displaying apparatus according to an exemplary embodiment;

FIG. 6 illustrates an image signal processed according to another exemplary embodiment; and

FIG. 7 is a control flowchart of another image signal processing method of the image displaying apparatus according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

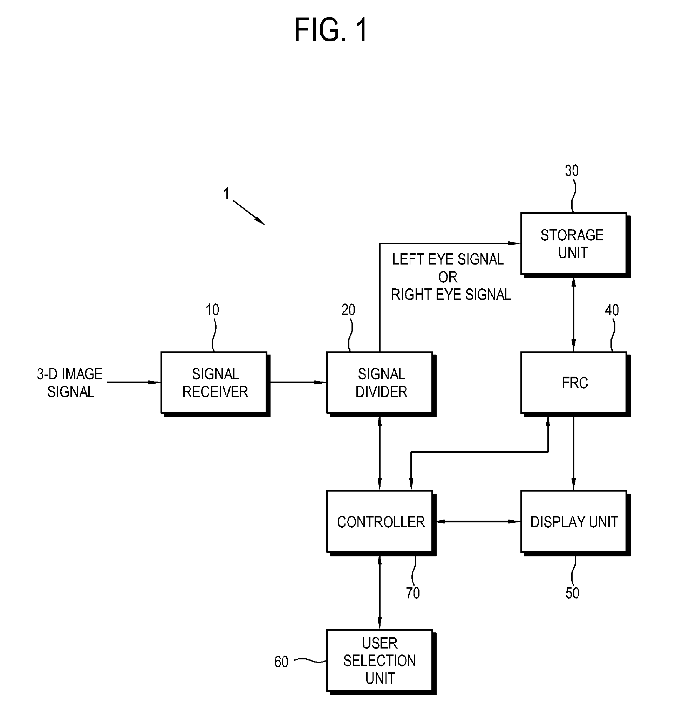

FIG. 1 is a control block diagram of an image displaying apparatus according to an exemplary embodiment.

As illustrated in FIG. 1, an image displaying apparatus 1 includes a signal receiver 10, a signal divider 20, a storage unit 30, a frame rate converter (FRC) 40, a display unit 50, a user selection unit 60 and a controller 70, which controls the foregoing elements. The image displaying apparatus 1 may be embodied as a television, a monitor, or a portable terminal, such as a mobile phone, which receives and displays a three-dimensional (3D) image signal from an image source. The image displaying apparatus may receive and display a two-dimensional (2D) image signal, i.e., a planar image signal, or a three-dimensional image signal, i.e., a solid image signal. The image displaying apparatus may display a received 3D image signal in the form of a 2D image. The sold image signal may be divided into a left eye signal and a right eye signal to be recognized by a viewer's left and right eyes, respectively. The divided image signals are alternately displayed by frame.

The signal receiver 10 receives a 2D image signal or a 3D image signal, as described above. The signal receiver 10 may include a tuner that receives a signal in a wireless manner from a broadcasting station. The signal receiver may be configured to load a 3D image from a disk, such as blue-ray disk or the like, or an external display apparatus mounted with a disk, such as blue-ray disk or the like. The signal receiver 10 may receive various types of 3D image signals. The 3D image signal may be received by "frame by frame," "frame package," "side by side," "top and bottom," "checker board," "field by field," etc. The term "frame by frame" means a left eye signal and a right eye signal alternately input by frame. The term "frame package" means a left eye signal and a right eye signal that are packaged and received as a single frame at a predetermined resolution. A left eye signal and a right eye signal, which are received by frame package, may be directly displayed on the display unit 50 without a resolution adjustment to increase the resolution. The term "side by side" means a left eye signal and a right eye signal that are connected side by side and input as a single frame. The term "top and bottom" means a left eye signal and a right eye signal that are connected from top to bottom as a single frame. The term "checker board" means a left eye signal and a right eye signal, which are alternately connected up and down and left and right, like a checker board, and input as a single frame. The term "field by field" means a field that is formed as one of odd lines or even lines. A left eye signal and a right eye signal, which are received by side by side, top and bottom, checker board and field by field, has a resolution which is half of a certain resolution of an image signal received by frame package.

The signal divider 20 divides a received 3D image signal into a left eye signal and a right eye signal. The divided left eye signal and right eye signal are stored in the storage unit 30 acting as a buffer. The storage unit 30 stores the divided left eye signal and right eye signal by frame. The storage unit 30 may be formed as hardware, which is physically divided from the signal divider 20, or may be merged with the signal divider 20. If a left eye signal and a right eye signal are alternately displayed, a user may recognize a 3D image. If one of a left eye signal and a right eye signal is consecutively displayed, a user may recognize a 2D image.

The FRC 40 converts a frame rate of an input image signal. The FRC 40 generates an interpolation frame, or repeatedly outputs the same frame, as a received image signal, and therefore a frame rate of an image signal, which is processed by the FRC 40, is higher than a primitive frame rate.

The display unit 50 displays an image based on a processed image signal. The display unit 50 may include a liquid crystal display (LCD) panel, including a liquid crystal layer, an organic light emitting diode (OLED) panel, including an organic material, or a plasma display panel (PDP), and a panel driver to drive the foregoing panels.

The user selection unit 60 includes a user interface to select a display type of a 3D image signal by a user. A user may select a 3D image or 2D image signal to be displayed from a received 3D image signal through the user selection unit 60. A selection signal which is input by the user selection unit 60 is input to the controller 70. The controller 70 controls the 3D image signal to be processed based on the selection signal. The user selection unit 60 may include an input unit, such as a button, a mouse, a remote control unit, a hot key, or a touch panel, to provide a graphic user interface (GUI) to receive a user's selection. If the user selection unit 60 includes a touch panel, the touch panel may be mounted inside or outside of the display unit 50 to be formed as a single body with the display unit 50.

If a 3D image signal is received from the signal receiver 10, the controller 70 controls the FRC 40 and the signal divider 20 to alternately display the divided left eye signal and right eye signal on the display unit 50 at a first frame rate if a user selects to display the received 3-D image signal in the form of a 3-D image through the user selection unit 60. Alternatively, the controller 70 controls the FRC 40 and the signal divider 20 to consecutively display one of the divided left eye signal and right eye signal on the display unit 50 at a second frame rate if a user selects to display the received 3D image signal in the form of a 2D image through the user selection unit 60.

That is, the FRC 40 alternately displays, on the display unit 50, a left eye frame and a right eye frame stored in the storage unit 30 at a first frame rate according to a control of the controller 70 if a display type of a 3D image signal with the image signal is selected. Similarly, the FRC 40 consecutively displays, on the display unit 50, one of the stored left eye frame and right eye frame at a second frame rate according to the control of the controller 70 if a display type of a 2-D image signal with the image signal is selected.

The second frame rate is equal to or greater than the first frame rate (which will be described in more detail later).

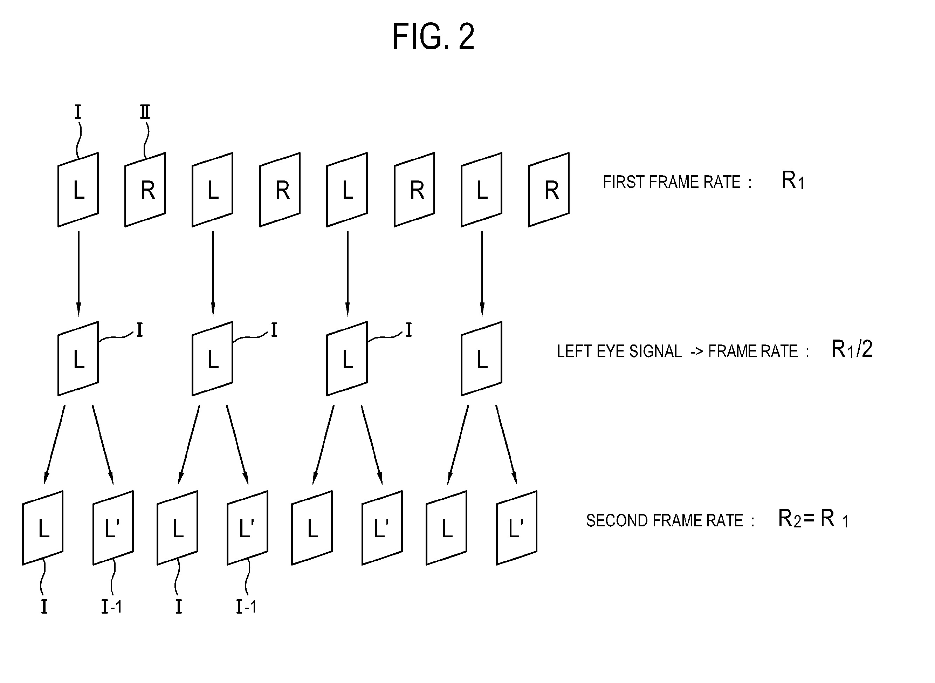

FIG. 2 illustrates an image signal processed according to the exemplary embodiment of the image displaying apparatus in FIG. 1. A frame rate of a 3D image signal, which does not go through an image processing operation, is referred to as a first frame rate R1. A 3D image signal according to the present exemplary embodiment is received by frame by frame, in which a left eye signal I and a right eye signal II are alternately received by frame. The controller 70 stores in the storage unit 30 only the left eye signal I out of the left eye signal I and the right eye signal II, which are divided by the signal divider 20. If only the stored left eye signal I is output to the display unit 50, a frame rate of the output image is 1/2 of the first frame rate R1. If one of the left eye signal I and the right eye signal II is output to the display unit 50 to display a 2D image with a 3D image signal, a user may not recognize a proper image because a frame rate of the image is reduced in half. To compensate for the reduced frame rate , the controller 70 controls the FRC 40 to output a first frame I-1 with the left eye signal I. Accordingly, a second frame rate R2 of an output image, including the left eye signal I and the first frame I-1, is adjusted to be equal to the first frame rate R1, and therefore a user may recognize a compensated image. In sum, the controller 70 consecutively outputs the left eye signal I and the first frame I-1, instead of the abandoned right eye signal II, to compensate for the reduced frame rate.

The FRC 40 may output a frame that is the same as the left eye signal I, as the first frame I-1, or generate an interpolation frame with the left eye signal I. The interpolation frame may be generated by at least two consecutive left eye signals I, i.e., a current left eye signal I and a previous or subsequent left eye signal I. The process of generating an interpolation frame may apply to all of known processes.

If a user selects to display a 3D image with a 3D image signal through the user selection unit 60 or if a display type of a 3D image with a received 3D image signal is set as a default, the controller 70 may alternately display, on the display unit 50, a left eye signal and a right eye signal that are divided by the signal divider 20. If a received image signal is displayed as a 3D image, all of the left eye signal and the right eye signal are stored in the storage unit 30 and the left eye signal the right eye signal are alternately output to the display unit 50. In this case, a black frame may be inserted or an interpolation frame may be generated to change a frame rate of the image.

Other than the foregoing image processing methods, the image displaying apparatus 1 performs various known image signal processing operations. For example, a received image signal may go through decoding, encoding, deinterlacing, noise-removing and detail-enhancing processes. The foregoing signal processing operations may be performed by individual elements or by an integrated element, such as through the signal divider 20 or the FRC 40.

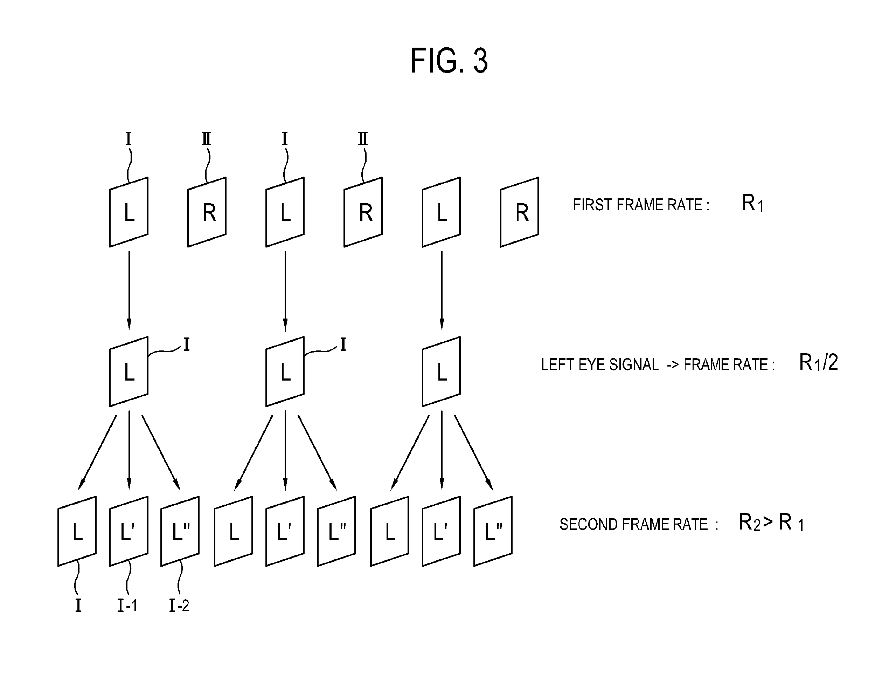

FIG. 3 illustrates an image signal processed according to another exemplary embodiment of the image displaying apparatus in FIG. 1. As illustrated in FIG. 3, an output image includes a left eye signal I, a first frame I-1, and a second frame 1-2, which are generated from the left eye signal I. According to the present exemplary embodiment, a second frame rate R2 of the output image is greater than the first frame rate R1. In accordance with a user's needs for quality images , a frame rate of an image displayed in an image displaying apparatus becomes higher. The FRC 40 may generate two intermediate frames I-1 and 1-2. The first frame I-1 and the second frame 1-2 may be the same or different. The first frame I-1 and the second frame 1-2 may be the same as the left eye signal I or may be an interpolation frame.

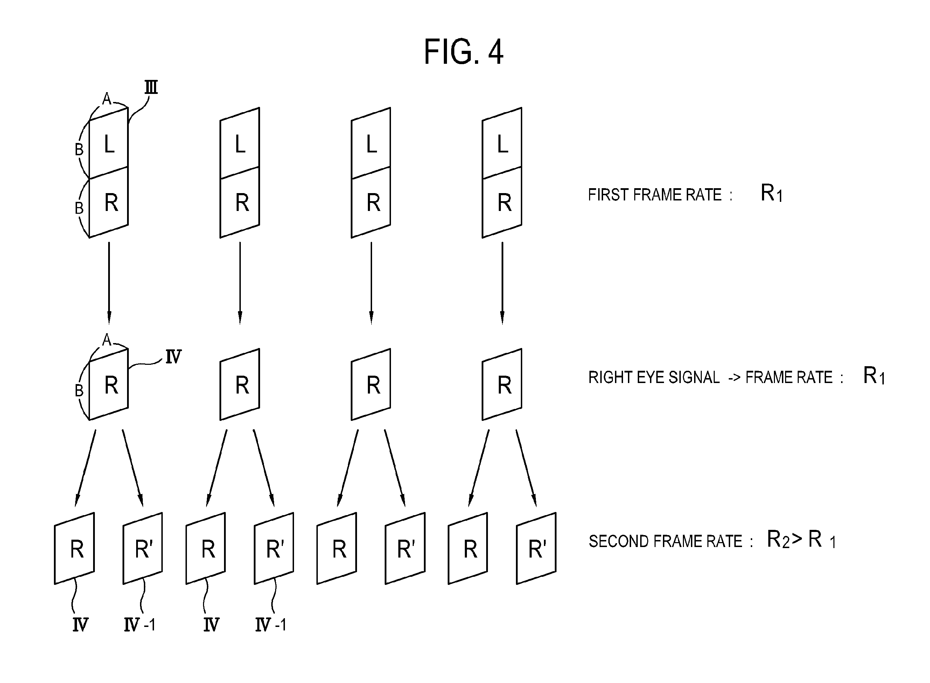

FIG. 4 illustrates an image signal processed according to another exemplary embodiment of the image displaying apparatus in FIG. 1. A 3D image signal according to the present exemplary embodiment is received by frame package. The signal receiver 10 receives a 3D image signal III that includes a left eye signal and a right eye signal in a same resolution A^{*}B. A resolution of the left eye signal and the right eye signal included the 3D image signal III is the same as that of the left eye signal I or the right eye signal II in FIG. 2. The frame rate of the 3D image signal III, which is input by the frame package, does not change even if one of the left eye signal and the right eye signal is selected and output. The controller 70 stores, in the storage unit 30, a right eye signal IV out of the left eye signal and the right eye signal, and controls the FRC 40 to output a third frame IV-1 with the right eye signal IV. If the first frame rate R1 is 60Hz, for example, the second frame rate R2 of the output image is 120Hz, which is greater than the first frame rate R1. As will be understood by the skilled artisan, at least two intermediate frames may be generated, and alternately the left eye signal, instead of the right eye signal IV, may be selected and output. As the generated intermediate frames increase the frame rate and may compensate for a motion in accordance with a motion estimation, a clear, high-quality image may be produced.

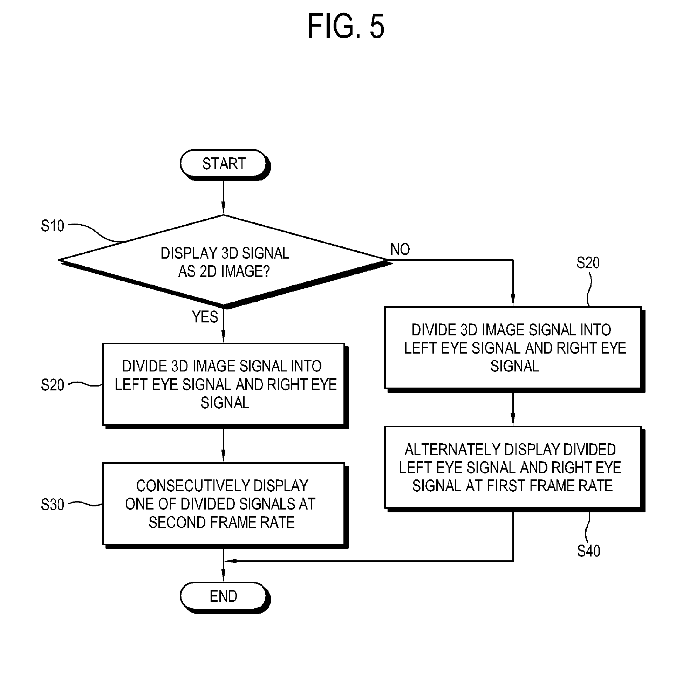

FIG. 5 is a flowchart of an image signal processing method of the image displaying apparatus according to an exemplary embodiment. The processed image signals in FIGS. 2 to 4 will be described with reference to FIG. 5.

A selection signal is received from the user selection unit 60 to display a 3D image signal in the form of a 2D image (S10).

The controller 70 controls the signal divider 20 to divide the received 3D image signal into a left eye signal and a right eye signal, regardless of whether the selection signal indicates to display the 3D image in the form of a 2D image (S20).

If displaying the 3D signal as a 2D image is selected, the controller 70 consecutively displays, on the display unit 50, one of the divided left eye signal and right eye signal at the second frame rate (S30). If displaying the 3D image signal as the 3D image is selected, the controller 70 alternately displays, on the display unit 50, the divided left eye signal and right eye signal at the first frame rate (S40). The second frame rate may be equal to or greater than the first frame rate. The FRC 40 may repeatedly output the selected signal to the display unit 50 or output a new interpolation frame to the display unit 50.

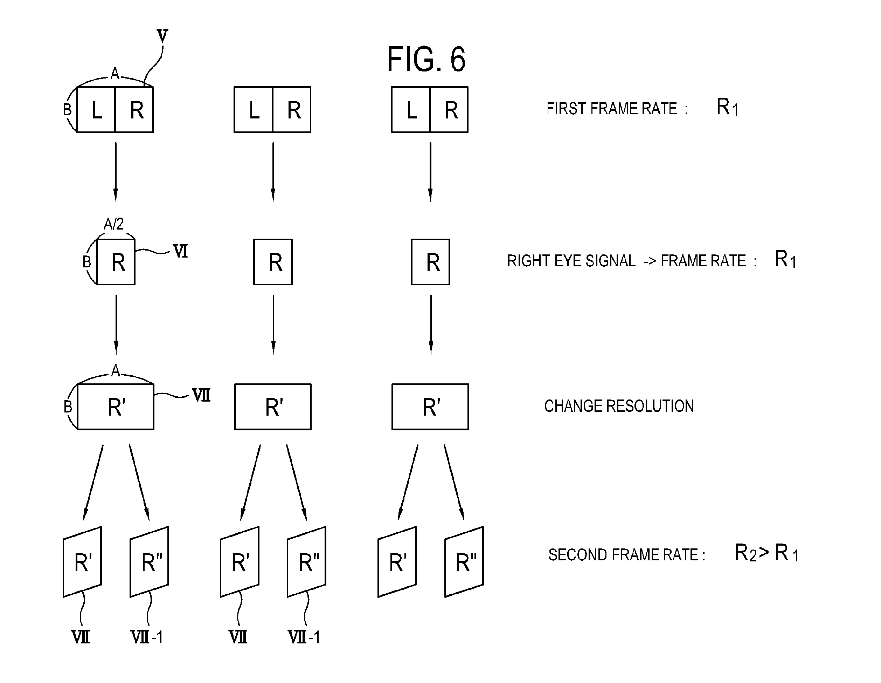

FIG. 6 illustrates an image signal of the image displaying apparatus in FIG. 1 processed according to another exemplary embodiment.

As illustrated in FIG. 6, the signal receiver 10 according to the present exemplary embodiment receives a 3D image signal V by side by side at a resolution A^{*}B. If the right eye signal VI is extracted from the received 3D image signal V, the frame rate is not reduced, but a resolution of the image signal becomes 1/2 of the resolution A^{*}B of the received 3D image signal V.

The controller 70 controls one of the signal divider 20 and the FRC 40 to change the resolution of the right eye signal VI into a predetermined resolution, i.e., a resolution of the received primitive image signal. The change of the resolution, i.e., scaling of the image signal, may be performed between image processing operations or performed several times. The resolution of the right eye signal VI may be adjusted and stored in the storage unit 30 after being extracted from the 3D image signal or changed by the FRC 40.

The FRC 40 outputs, to the display unit 50, a frame VII-1, based on a right eye signal VII whose resolution is changed to A*B. An output image, which includes the right eye signal VII with the changed resolution and the frame VII-1, which is generated based on the right eye signal VII, is output to the display unit 50 at the second frame rate R2, the second frame rate R2 having a frame rate that is higher than the first frame rate R1.

As in the present exemplary embodiment, a process of changing the resolution and adjusting the frame rate may also apply to the cases when a 3D image signal is received by one of top and bottom, checker board and field by field, instead of side by side.

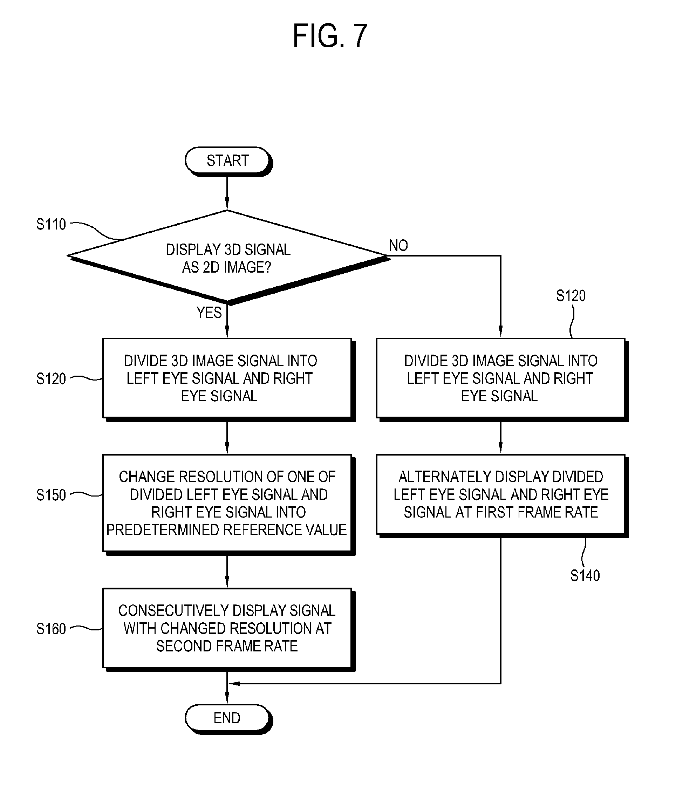

FIG. 7 is a flowchart of an image signal processing method for processing the signal illustrated in FIG. 6. An image signal processing method which accompanies a change of resolution will be described with reference to FIG. 7.

A selection signal is received from the user selection unit 60 indicating whether to display the 3D image signal as a 2D image (S110), and the controller 70 divides the 3-D image signal into a left eye signal and a right eye signal (S120).

If displaying the 3D signal as a 2D image is selected, the controller 70 changes a resolution of one of the divided left eye signal and right eye signal into a predetermined reference value (S150). The resolution may be changed into an optimum value to display the image signal on the display unit 50.

Then, the FRC 40 consecutively outputs, to the display unit 50, one of the left eye signal and right eye signal with the changed resolution at the second frame rate (S160).

If a displaying the 3D signal as a 3D image is selected, the divided left and right eye signals are alternately displayed on the display unit 50 (S140).

As described above, an image displaying apparatus and an image signal processing method display a 3D image signal as a 2D image at a compensated frame rate.

An image displaying apparatus and an image signal processing method of the same according to another exemplary embodiment display a 3D image signal as a 2D image including a compensation frame.

An image displaying apparatus and an image signal processing method of the same according to another exemplary embodiment display a 3D image signal as a 2-D image by adjusting a resolution and a frame rate.

Although a few exemplary embodiments have been described, it will be appreciated by those skilled in the art that changes may be made in these exemplary embodiments without departing from the principles and spirit of the inventive concept, the scope of which is defined in the appended claims and their equivalents.

## Claims

1. An image displaying apparatus, comprising:
a signal receiver which receives a three-dimensional (3D) image signal;
a signal divider which divides the 3D image signal into a left eye signal and a right eye signal;
a frame rate converter (FRC) which converts a frame rate of the received 3D image signal from a first frame rate to a second frame rate;
a user selection unit which receives a user selection input that indicates whether to display the 3D image signal as a two-dimensional (2D) image or a 3D image;
a display unit which displays the 3D image signal as the 2D image or the 3D image, based on the user selection input received by the user selection unit; and
a controller which controls the FRC and the signal divider to alternately display, on the display unit, the left eye signal and the right eye signal at the first frame rate if the user selection input indicates to display the 3D image signal as the 3D image, and to consecutively display, on the display unit, one of the left eye signal and the right eye signal at a second frame rate if the user selection input indicates to display the 3D image signal as the 2D image.

2. The image displaying apparatus according to claim 1, further comprising a storage unit which stores the divided left eye signal and right eye signal by frame,
wherein the FRC alternately outputs, to the display unit, a left eye frame and a right eye frame stored in the storage unit at the first frame rate if the user selection input indicates to display the 3D image signal as the 3D image, and consecutively outputs, to the display unit, one of the left eye frame and the right eye frame stored in the storage unit at the second frame rate if the user selection input indicates to display the 3D image signal as the 2D image.

3. The image displaying apparatus according to claim 1, wherein the second frame rate is equal to or greater than the first frame rate.

4. The image displaying apparatus according to claim 2, wherein the FRC generates at least one interpolation frame with the left eye frame and an adjacent left eye frame, and consecutively outputs, to the display unit, the left eye frame and the at least one interpolation frame at the second frame rate if the user selection input indicates to display the 3D image signal as the 2D image.

5. The image displaying apparatus according to claim 4, wherein the second frame rate is equal to the first frame rate, and the generated at least one interpolation frame is a single interpolation frame.

6. The image displaying apparatus according to claim 4, wherein the second frame rate is greater than the first frame rate, and the generated at least one interpolation frame is at least two interpolation frames.

7. The image displaying apparatus according to claim 2, wherein the FRC generates at least one interpolation frame with the right eye frame and an adjacent right eye frame, and consecutively outputs, to the display unit, the right eye frame and the at least one interpolation frame at the second frame rate if the user selection input indicates to display the 3D image signal as the 2D image.

8. The image displaying apparatus according to claim 7, wherein the second frame rate is equal to the first frame rate, and the generated at least one interpolation frame is a single interpolation frame.

9. The image displaying apparatus according to claim 7, wherein the second frame rate is greater than the first frame rate, and the generated at least one interpolation frame is at least two interpolation frames.

10. An image signal processing method of an image displaying apparatus including a display unit, the method comprising:
receiving, by the image displaying apparatus, a three-dimensional (3D) image signal;
dividing the received 3D image signal into a left eye signal and a right eye signal;
receiving a selection signal that indicates whether to display the 3D image signal as a 3D image or to display the 3D image signal as a 2D image; and
alternately displaying, on the display unit, the left eye signal and the right eye signal at a first frame rate if the selection signal indicates to display the 3D image signal as the 3D image, and consecutively displaying, on the display unit, one of the left eye signal and the right eye signal at a second frame rate if the selection signal indicates to display the 3D image signal as the 2D image.

11. The method according to claim 10, further comprising storing the left eye signal and the right eye signal by frame,
wherein the displaying comprises alternately displaying, on the display unit, the stored left eye frame and the stored right eye frame at the first frame rate if the selection signal indicates to display the 3D image signal as the 3D image, and consecutively displaying, on the display unit, one of the stored left eye frame and the stored right eye frame at the second frame rate if the selection signal indicates to display the 3D image signal as the 2D image.

12. The method according to claim 11, wherein the displaying comprises generating at least one interpolation frame with the left eye frame and a previous left eye frame, and consecutively displaying, on the display unit, the left eye frame and the at least one interpolation frame at the second frame rate if the selection signal indicates to display the 3D image signal as the 2D image.

13. The method according to claim 12, wherein if the second frame rate is the same as the first frame rate, the generating the interpolation frame comprises generating a single interpolation frame, and
if the second frame rate is higher than the first frame rate, the generating the interpolation frame comprises generating at least two interpolation frames.

14. The method according to claim 11, wherein the displaying comprises generating at least one interpolation frame with the right eye frame and a previous right eye frame, and consecutively displaying, on the display unit, the right eye frame and the at least one interpolation frame at the second frame rate if the selection signal indicates to display the 3D image signal as the 2D image.

15. The method according to claim 14, wherein if the second frame rate is the same as the first frame rate, the generating the interpolation frame comprises generating a single interpolation frame, and
if the second frame rate is higher than the first frame rate, the generating the interpolation frame comprises generating at least two interpolation frames.
